# FASCICULE DE BREVET EUROPEEN

(11) **EP 0 657 976 B1**
(45) Date de publication et mention de la délivrance du brevet: **19.09.2001**
(21) Numéro de dépôt: 94402560.0
(22) Date de dépôt: 14.11.1994
(51) Int. Cl.: H01S 3/113, H01S 3/06, G02F 1/35

(54) **Cavité laser à déclenchement passif par absorbant saturable et laser incorporant cette cavité**
Laser-Resonator mit passiver Güteschaltung durch einen sättigbaren Absorber
Laser resonator with passive Q-switch saturable absorber

(30) Priorité: 15.11.1993 FR 9313563
(43) Date de publication de la demande: 14.06.1995
(73) Titulaire: COMMISSARIAT A L'ENERGIE ATOMIQUE, 75015 Paris Cédex 15 (FR)
(72) Inventeur: Chartier, Isabelle, F-38000 Grenoble (FR); Ferrand, Bernard, F-38340 Voreppe (FR); Pelenc, Denis, F-38240 Meylan (FR); Wyon, Christophe, F-38000 Grenoble (FR)
(74) Mandataire: Dubois-Chabert, Guy

(56) Documents cités:
- GB-A- 1 566 716
- US-A- 3 270 291
- OPTICS LETTERS., vol.18, no.18, 15 Septembre 1993, NEW YORK US pages 1514 - 1516, XP000396927 Y.TSOU ET AL. 'Passive Q switching of Nd:Yag bye use of bulk semiconductors'

## Description

La présente invention se rapporte au domaine des lasers déclenchés. Le but de ce type de laser est de produire des impulsions lumineuses cohérentes de courte durée et dont la puissance crête émise est grande devant celle utilisée pour le pompage. Il existe de façon standard, deux solutions pour réaliser ce déclenchement : l'une est appelée active, l'autre passive. Cette dernière est utilisée dans l'invention.

De façon plus précise, déclencher une cavité laser consiste à rajouter dans celle-ci des pertes variables dans le temps qui vont empêcher l'effet laser de se produire pendant un certain temps, durant lequel l'énergie de pompage est stockée dans le niveau excité du matériau à gain du laser. Ces pertes sont brusquement diminuées, à des moments précis, libérant ainsi l'énergie emmagasinée en un temps très court (impulsion géante). On atteint ainsi une puissance crête élevée.

Dans le cas d'un déclenchement dit actif, la valeur des pertes est pilotée de façon externe par l'utilisateur (par exemple au moyen d'un miroir de cavité tournant, moyen acousto-optique ou électro-optique intracavité changeant soit le trajet du faisceau, soit son état de polarisation). La durée de stockage, l'instant d'ouverture de la cavité ainsi que le taux de répétition peuvent être choisis indépendamment. En contrepartie, cela nécessite une électronique adaptée et complique considérablement le système laser.

Dans le cas d'un déclenchement dit passif, les pertes variables sont introduites dans la cavité sous forme d'un matériau (appelé Absorbant Saturable - A.S. -) qui est fortement absorbant à la longueur d'onde laser et à faible densité de puissance, et qui devient pratiquement transparent lorsque cette densité dépasse un certain seuil qu'on appelle intensité de saturation de l'A.S. L'énorme avantage du déclenchement passif est qu'il ne nécessite aucune électronique de pilotage.

Les A.S. connus contiennent souvent des molécules organiques qui sont responsables de l'absorption. Ces matériaux se présentent en général sous forme liquide ou plastique, et ils sont donc souvent de mauvaise qualité optique, vieillissent très vite et ont une mauvaise tenue au flux laser.

Des matériaux solides massifs sont aussi utilisés en tant qu'A.S. Par exemple pour les lasers émettant autour de 1 µm (YAG avec ions actifs : Nd³⁺ ou Yb³⁺) on peut utiliser :
- des cristaux de LiF:F2 comportant des centres colorés responsables du comportement A.S. du matériau et qui ont une durée de vie limitée,
- certains cristaux massifs dopés Cr⁴⁺ qui présentent une absorption saturable autour de 1 µm.

Mais pour ce type d'absorbant saturable massif, la concentration en ion absorbant limitée nécessite l'emploi d'une grande épaisseur de matériau, empêche une focalisation forte du faisceau et donc augmente les seuils. De plus, ceci interdit les applications où la source doit être très compacte (c'est le cas d'un microlaser dont la longueur de cavité vaut environ 1 mm).

De bons résultats ont été obtenus avec des cristaux massifs codopés avec l'ion actif et l'ion absorbant : Nd³⁺ et Cr⁴⁺ par exemple. L'avantage de ces matériaux lasers auto-déclenchés est que l'on n'introduit pas de matériau différent pour le déclenchement et donc pas de pertes supplémentaires. Leur inconvénient est de lier la concentration en ion actif à celle en ion absorbant ce qui rend difficile l'optimisation du laser : l'adaptation du laser à la puissance de pompe disponible nécessite alors la croissance d'un nouveau cristal massif.

Pour les lasers émettant autour de 1,5 µm (ion actif : Er³⁺), il existe des matériaux massifs fortement dopés Er³⁺ qui présentent une absorption saturable autour de 1,5 µm et qui permettent de déclencher de tels lasers. Mais on retrouve là tous les problèmes liés aux matériaux massifs et exposés ci-dessus.

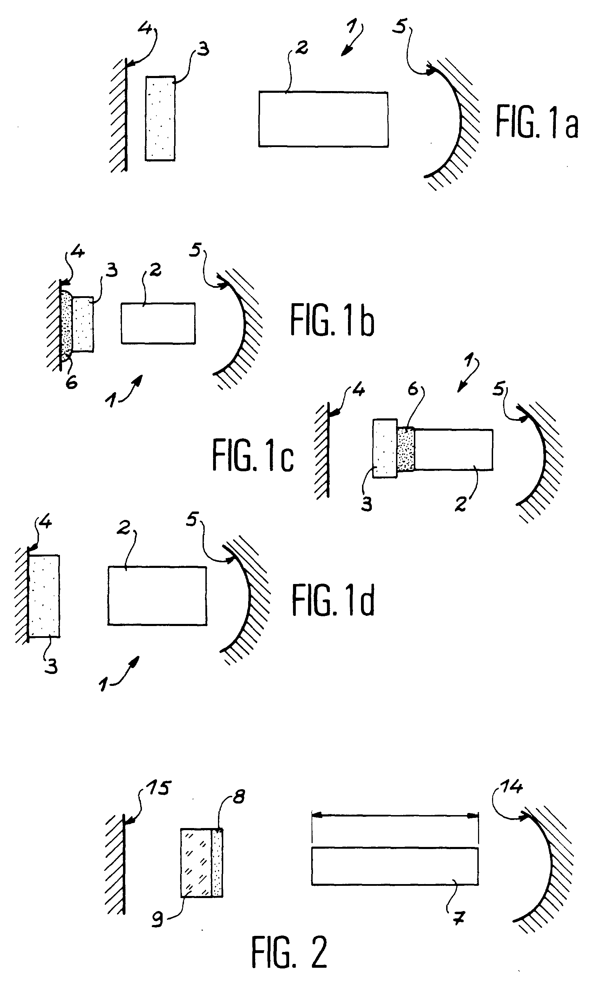

Dans les lasers connus déclenchés passivement à l'aide de ces absorbants saturables, différentes méthodes de réalisation des cavités déclenchées existent et dépendent de l'A.S. utilisé :
1- Une première méthode est illustrée sur la figure la où l'on voit une cavité laser 1, le matériau actif laser 2 (solide), l'absorbant saturable 3 et les miroirs de sortie 4 et d'entrée 5 de la cavité.
   Il n'y a aucun contact entre l'absorbant saturable 3, d'une part, et les autres éléments de la cavité 1, d'autre part.
   Dans ce type de dispositif, il est nécessaire d'aligner optiquement les éléments de la cavité.
2- Dans les arrangements schématisés sur les figures 1b et 1c, un contact est assuré entre l'absorbant saturable 3 et le miroir 4 (figure 1b) ou le matériau actif laser 2 (figure 1c) à l'aide d'une colle optique 6.
   Mais la colle introduit un facteur d'absorption résiduelle ainsi que des différences d'indices à l'interface colle-matériaux collés. De plus, un éventuel défaut de parallélisme entre les éléments collés peut être lui-aussi source de pertes dans la cavité laser.
3- La figure 1d, où les références 4, 5 représentent encore les miroirs et la référence 2 le milieu actif laser, illustre une troisième disposition possible, où l'un des miroirs 4 est directement déposé sur l'absorbant saturable 3. Mais ceci n'est possible que lorsque l'absorbant saturable peut subir une opération de polissage avant d'y déposer le miroir, et ceci n'est le cas que lorsqu'il est essentiellement constitué d'un verre ou d'un cristal.

Le document US-A-3 270 291 décrit une cavité laser selon le préambule de la revendication 1.

L'invention a justement pour objet un nouveau type de cavité laser à milieu actif solide, permettant de résoudre les différents problèmes mentionnés ci-dessus.

Pour remédier aux problèmes ci-dessus, l'invention selon la revendication 1 propose de réaliser l'absorbant saturable sous la forme d'une couche mince, déposée directement sur le milieu actif solide.

L'invention a donc pour objet une cavité laser comportant un milieu actif laser solide, un substrat, un absorbant saturable, un miroir d'entrée et un miroir de sortie, caractérisée en ce que l'absorbant saturable est une couche mince de matériau absorbant saturable déposée directement sur le milieu actif solide.

La forme de couche mince de l'absorbant saturable permet de s'affranchir de certains problèmes liés aux absorbants saturables sous forme massive, qui ont été présentés ci-dessus. Ainsi, il sera possible de minimiser les pertes à l'intérieur de la cavité, qui sont dues à la forme massive de l'absorbant saturable classique. Enfin, il est clair que cette structure permet de réaliser un gain de place à l'intérieur de la cavité laser.

De façon préférée, cette cavité laser est caractérisée en ce que la couche mince est susceptible d'être obtenue par épitaxie en phase liquide.

L'intérêt de réaliser le dépôt de la couche mince par épitaxie en phase liquide est que cette technique de dépôt permet une grande souplesse de réalisation de différents dopages et codopages en vue de l'adaptation à différents lasers. Elle permet, de plus, d'atteindre une concentration plus élevée (si nécessaire) que par les autres méthodes de croissance cristalline, d'où la possibilité d'utiliser des couches de très faible épaisseur (∼100 µm) et d'utiliser ainsi des faisceaux fortement focalisés.

En outre, le seuil de dommage est plus élevé car le matériau ainsi réalisé est de qualité cristalline.

Cette méthode offre de plus, la possibilité de contrôler de façon très précise l'épaisseur et la concentration de la couche mince, selon le type de laser.

Là encore, l'absorbant saturable ainsi réalisé n'occasionnera que de très faibles pertes intracavité du fait de la bonne qualité optique des couches et de la faible épaisseur nécessaires (<500 µm).

Selon l'invention, l'absorbant saturable est déposé directement sur le milieu actif solide.

De préférence, l'indice de réfraction de la couche mince d'absorbant saturable est adapté à l'indice de réfraction du milieu actif solide.

La couche mince, quant à elle, peut être composée d'un matériau de base présentant une structure cristalline identique à ou proche de celle du milieu actif solide, ce matériau de base étant dopé avec des ions d'erbium, de chrome, de thulium ou d'holmium.

L'invention offre également la possibilité de réaliser une cavité laser ayant une structure de guide d'onde.

La couche mince d'absorbant saturable est comprise entre deux couches minces de matériau actif laser.

Toutes les couches sont susceptibles d'être obtenues par épitaxie en phase liquide.

Un laser selon l'invention comporte, outre une cavité laser telle que décrite précédemment et des moyens de pompage de la cavité.

D'autres caractéristiques et avantages de l'invention ressortiront mieux de la description qui va suivre, donnée à titre purement illustratif et non limitatif, en référence aux figures annexées dans lesquelles :
- les figures 1a à 1d, déjà décrites, représentent schématiquement diverses dispositions possibles d'une cavité laser, selon l'art antérieur,
- la figure 2 représente une cavité laser selon un premier mode de réalisation de l'invention,
- la figure 3 représente une cavité microlaser selon un deuxième mode de réalisation de l'invention,
- la figure 4 représente une cavité laser selon un troisième mode de réalisation de l'invention,
- la figure 5 représente une cavité laser selon un quatrième mode de réalisation de l'invention ayant une structure de guide d'ondes.

Selon l'invention, la couche mince d'absorbant saturable est déposée directement sur le matériau actif laser .

Suivant le type d'application de la structure de la cavité laser, plusieurs dispositifs sont envisageables. Les deux plus simples concernent l'utilisation comme substrat actif, soit d'un barreau laser classique, soit d'un microlaser constitué d'une lame monocristalline. Dans ces différentes configurations, l'indice de réfraction de la couche mince d'absorbant saturable (A.S.). est de préférence adapté à l'indice de réfraction du milieu actif solide 7. La présente invention permet de réaliser cette exigence par des codopages appropriés de la couche d'A.S.

Le cas du dépôt sur un barreau laser classique est illustré sur la figure 2 où sont représentés une couche mince d'A.S. 13, un barreau laser 12, des miroirs d'entrée 14 et de sortie 15, un faisceau de pompage 16 et le faisceau laser émis 17. La couche d'A.S 13 est directement déposée sur la face polie du barreau 12 par trempe en surface du bain d'épitaxie (voir le procédé de préparation plus loin). De façon à rendre la structure plus compacte, le miroir de sortie 15 peut être déposé directement sur la couche mince 13.

On peut envisager de polir l'autre face 18 du barreau avec un rayon de courbure fini approprié puis d'y déposer le miroir d'entrée 14 de la cavité, la rendant ainsi monolithique, comme on peut le voir sur la figure 2. La longueur et le diamètre du barreau, l'épaisseur et le dopage de la couche A.S. sont à adapter au type de pompage utilisé qui, dans ce cas, peut être très varié : pompage par lampe, continu ou pulsé, pompage par diode, transverse ou longitudinal, continu ou pulsé.

L'avantage de ce montage est que l'ensemble constitué par le barreau 12 et par l'A.S. 13 se comporte comme un matériau massif.

L'adaptation de l'indice de la couche d'A.S. à celui du matériau laser peut être faite par codopage de la couche mince 13 avec du gadolinium (Gd) et du lutécium (Lu). Le gadolinium sert à adapter l'indice, mais il élargit la maille du réseau cristallin, ce que l'on peut compenser par un codopage de lutécium.

Avec ce type de cavité laser, aucune perte due à un mauvais alignement ou à des réflexions de Fresnel n'est introduite dans la cavité.

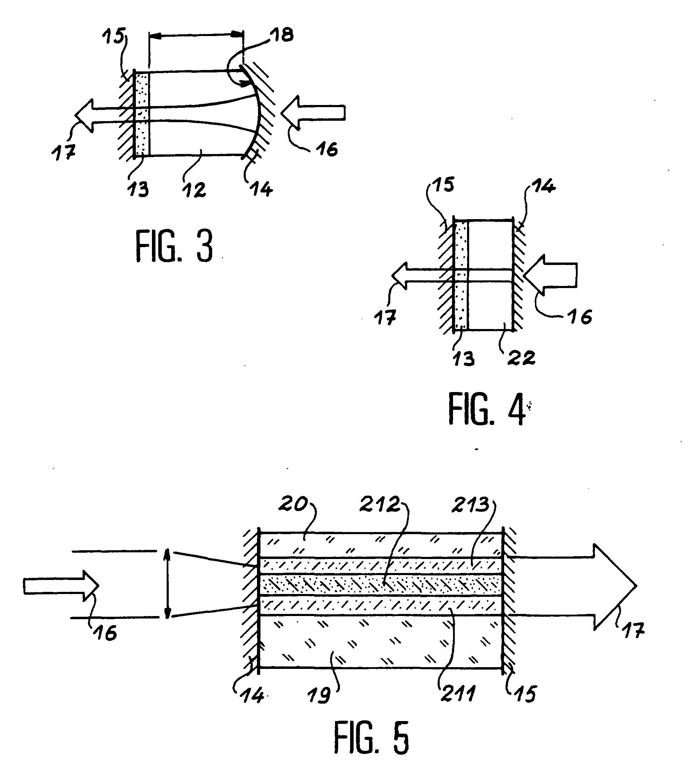

Dans le cas du dépôt sur un milieu microlaser (voir figure 3), on épitaxie une couche d'A.S. 13 (éventuellement avec un codopage comme expliqué ci-dessus) sur une face du milieu actif microlaser 22, utilisé comme substrat (épaisseur 0,1-2 mm). Les références 16 et 17 ont la même signification que dans le cas de la figure 4.

La fabrication collective de tels lasers reste ensuite pratiquement identique à celle des microlasers continus grâce à la technique de réalisation de l'A.S. qui ne modifie pas la structure monocristalline de l'ensemble. Les deux miroirs 14 et 15 de la cavité sont alors déposés sur les faces préalablement polies de la structure substrat/couche. L'ensemble substrat-couche-miroirs est alors découpé en parallélépipèdes d'environ 1x1mm² réalisant ainsi un grand nombre de microlasers déclenchés.

De préférence et selon tous les modes de réalisation de l'invention, les miroirs sont des miroirs dichroïques.

Selon un mode de réalisation de l'invention, on réalise un laser ayant une structure de guide d'ondes.

La technique consiste à empiler plusieurs couches épitaxiées dopées différemment sur un substrat non dopé afin de réaliser un guide d'onde laser déclenché. L'empilement de couches ainsi obtenu est découpé en parallélépipèdes de longueur adaptée au pompage et au type de laser à réaliser. Deux faces latérales sont alors polies parallèlement et des miroirs y sont déposés, le tout formant une cavité laser monolithique qui peut être pompée suivant les cas transversalement ou longitudinalement.

La figure 5 illustre un exemple de guide d'ondes selon l'invention.

On réalise l'épitaxie sur un substrat 9 de YAG non dopé, d'une couche 211 de matériau actif laser (par exemple, YAG:Er faiblement dopé), puis l'épitaxie d'une couche 212 d'absorbant saturable (par exemple YAG:Er fortement dopé), puis de nouveau l'épitaxie d'une couche 213 de matériau actif laser (par exemple, YAG:Er faiblement dopé) et enfin le dépôt d'une couche de YAG non dopé 20. Les couches minces sont ainsi comprises entre deux couches de protection non guidantes 19, 20. Les trois couches épitaxiées sont codopées Gd, Lu afin de créer un gradient d'indice optimisant le guidage dans les couches actives (faiblement dopées en Er) et la couche A.S. (fortement concentrée en Er).

D'autres matériaux que le YAG peuvent remplacer celui-ci (voir leur liste plus haut) et d'autres dopages peuvent être utilisés suivant la longueur d'onde recherchée pour l'émission laser (Nd, Yb, Tm).

Un laser selon l'invention incorpore une cavité telle que décrite précédemment ainsi que des moyens de pompage de celle-ci ; de préférence, ces moyens de pompage consistent en au moins une lampe ou une diode, qui pompe la cavité selon une direction longitudinale (comme sur les figures 2, 3, 4) ou selon une direction transversale (perpendiculaire au plan des figures).

Un procédé de fabrication d'une cavité laser telle que décrite précédemment sera maintenant décrit.

Le matériau A.S. est une couche monocristalline dopée, épitaxiée sur un matériau massif monocristallin (substrat) de même structure cristalline. La méthode utilisée est l'épitaxie en phase liquide (EPL). On adapte le type de cristal et de dopant au laser que l'on veut déclencher, afin que la couche épitaxiée présente une absorption saturable à la longueur d'onde d'émission de ce laser. L'épitaxie est une méthode de croissance cristalline qui permet d'accéder à des concentrations en dopants plus élevées que les méthodes conventionnelles de croissance de cristaux massifs. Elle apporte aussi par rapport à ces autres méthodes l'avantage de permettre l'élaboration plus aisée de couches cristallines codopées par différents ions. Par ailleurs, l'EPL est la seule méthode d'épitaxie qui permette d'obtenir des couches d'épaisseur importante (>100 µm).

Le type de laser à réaliser détermine le matériau utilisé pour le substrat sur lequel on dépose la couche ainsi que l'ion dopant de la couche.

Le type de fonctionnement de ce laser détermine si le substrat doit être constitué d'un matériau actif laser ou non, ainsi que sa forme et ses dimensions.

Une face au moins du substrat est orientée et polie. L'étape finale du polissage doit être un procédé mécano chimique afin que cette face soit exempte de tout défaut (inclusion, dislocation, contrainte, rayure,...) qui se propagerait dans l'épaisseur de la couche lors de l'épitaxie. Cette qualité de polissage est contrôlée par une attaque chimique appropriée. Le procédé à mettre en oeuvre est sensiblement identique à celui mis au point pour les substrats utilisés dans les techniques classiques d'épitaxie.

Pour certains types de fonctionnement (par exemple laser guide d'ondes), le substrat peut présenter deux faces parallèles ayant cette qualité de poli. On parlera par la suite de substrat à "une face polie" ou à "deux faces polies".

On réalise la couche d'A.S. (absorbant saturable) par trempe du substrat dans une solution sursaturée convenablement choisie. Cette solution, ou bain d'épitaxie, est un mélange d'un solvant et d'un soluté constitué de différents éléments formant le matériau final. Le substrat et la couche sont de même structure cristalline et ne se différencient que par les différents dopants qui affectent les propriétés cristallines et optiques de la couche. Les ions actifs tels Nd, Er, Yb rendent le matériau amplificateur, d'autres ions (Cr, Er) lui confèrent des propriétés d'A.S. et certains autres peuvent être utilisés pour faire varier l'indice de réfraction ou la maille cristalline du matériau (par exemple Gd, Ge, Lu, ...). Il est ainsi possible de contrôler les propriétés des couches réalisées, et de déposer par cette technique non seulement des couches minces d'A.S., mais aussi des couches minces de matériau actif laser, comme lorsqu'on réalise un laser ayant une structure de guide d'onde ainsi que décrit précédemment (figure 5).

Ce procédé peut s'appliquer à tout matériau existant sous forme de monocristaux (pour la réalisation des substrats) et ouvrant être préparé par épitaxie en phase liquide. C'est le cas. des matériaux cités plus haut pour le matériau de base du milieu actif laser : Y₃A₁₅O₁₂ (YAG), Y₂SiO₅ (YSO), YVO₄, YLiF₄ (YLF), GdVO₄, etc... La composition du bain (choix du solvant et des substituants), les concentrations dans le soluté des différents oxydes et les conditions expérimentales de croissance (gamme de températures, mode opératoire, ...) sont ajustées pour chaque matériau afin d'obtenir des couches présentant la meilleure qualité cristalline possible.

Dans le cas des grenats (YAG), le solvant choisi est un mélange PbO/B₂O₃ et le soluté comprend un excès de Al₂O₃ afin de stabiliser la phase grenat. Le rapport soluté/solvant est alors calculé de façon à obtenir une croissance vers 1000°C.

En fonction de la composition du bain, de la température et du temps de dépôt, on peut ajuster l'épaisseur e de la couche (1<e<200 µm) et la concentration en dopants dans les couches. La croissance d'une couche a lieu à température constante, ce qui permet d'obtenir une concentration en dopant homogène dans l'épaisseur de la couche. Le substrat est animé d'un mouvement de rotation uniforme ou alternée, ce qui permet une bonne homogénéité d'épaisseur. Les substrats à "une face polie" sont trempés en surface de bain alors que les substrats à "deux faces polies" sont immergés dans ce bain.

Quand l'application le nécessite (par exemple laser guide d'ondes), on peut réaliser des épitaxies successives de matériaux dopés différemment créant ainsi un empilement de couches de même structure cristalline mais de propriétés optiques différentes.

Dans certains cas, lorsque l'état de surface de la couche (couches très épaisses) le nécessite, un polissage mécano-chimique pourra être réalisé, ceci soit entre deux épitaxies successives, soit en fin de procédé sur la surface finale de l'A.S. (par exemple avant dépôt de couches diélectriques réfléchissantes ou anti-réfléchissantes).

L'étape finale du procédé consiste à conditionner l'ensemble substrat-couche(s) en fonction de l'application désirée. Lorsque le substrat est actif, les procédés de découpe, polissage et dépôts diélectriques sont les mêmes que ceux connus et utilisés pour conditionner le matériau actif sans A.S. En effet, le matériau réalisé dans le cadre de l'invention est monolithique et de même structure cristalline.

L'invention peut s'appliquer à la fabrication de lasers. Elle trouve notamment une application dans le domaine des microlasers utilisés en optique intégrée, dans les télécommunications par fibre optique, en médecine (microchirurgie). Dans de telles applications, le gain en place que permet de réaliser l'invention est très avantageux. Le procédé de réalisation ne nécessite, quant à lui, que l'emploi d'une technique classique (EPL).

## Revendications

1. Cavité laser comportant un milieu actif laser solide (12, 22, 211, 213), un absorbant saturable (13, 21, 212), un miroir d'entrée (14) et un miroir de sortie (15), **caractérisée en ce que** l'absorbant saturable est une couche mince de matériau absorbant saturable, déposé directement sur ledit milieu actif solide (12, 22).

2. Cavité laser selon la revendication 1, **caractérisée en ce que** la couche mince est un dépôt obtenu par épitaxie en phase liquide.

3. Cavité laser selon la revendication 1 ou 2, **caractérisée en ce que** l'indice de réfraction de la couche mince d'absorbant saturable (8, 13, 212) est adapté à l'indice de réfraction du milieu actif solide (12, 22, 211, 213).

4. Cavité laser selon la revendication 3, **caractérisée en ce que** la couche mince (13, 212) est composée d'un matériau de base présentant une structure cristalline identique à ou proche de celle du milieu actif solide (7, 12, 22, 211, 213), ce matériau de base étant dopé avec des ions d'erbium, de chrome, de thulium ou d'holmium.

5. Cavité laser selon la revendication 1 ou 2, **caractérisée en ce que** le miroir de sortie (15) de la cavité est directement déposé sur la couche mince d'absorbant saturable (13).

6. Cavité laser selon la revendication 5, **caractérisée en ce que** le miroir d'entrée (14) est directement déposé sur le milieu actif solide (12, 22).

7. Cavité laser selon une des revendications 1 à 3, **caractérisée en ce qu'**elle présente une structure de guide d'onde.

8. Cavité laser selon la revendication 7, **caractérisée en ce que** le milieu actif laser est constitué par une première couche mince (211).

9. Cavité laser selon la revendication 8, **caractérisée en ce que** la couche mince d'absorbant saturable (212) est comprise entre la première couche mince de milieu actif laser (211) et une deuxième couche mince de milieu actif laser (213).

10. Cavité laser selon la revendication 9, **caractérisée en ce que** les deux couches minces (211, 213) de milieu actif laser sont des dépôts obtenus par épitaxie en phase liquide.

11. Cavité laser selon la revendication 9, **caractérisé en ce que** les trois couches minces (211, 212, 213) présentent un gradient d'indice de façon à optimiser le guidage.

12. Cavité laser selon la revendication 11, **caractérisée en ce que** la couche mince d'absorbant saturable (212) est composée d'un matériau de base présentant une structure cristalline identique à ou proche de celle du milieu actif solide (211, 213), ce matériau de base étant dopé avec des ions d'erbium, de chrome, de thulium ou d'holmium.

13. Laser comportant une cavité laser selon une des revendications précédentes, et des moyens de pompage de la cavité.

## Claims

1. Laser cavity comprising a solid, active laser medium (12, 22, 21, 211, 213), a saturable absorber (13, 21, 212), an entrance mirror (14) and an exit mirror (15), **characterized in that** the saturable absorber is a thin saturable absorber material film deposited directly on said solid, active medium (12, 22).

2. Laser cavity according to claim 1, **characterized in that** the thin film is obtainable by liquid phase epitaxy.

3. Laser cavity according to claim 1 or 2, **characterized in that** the refractive index of the saturable absorber film (8, 13, 21, 212) is adapted to the refractive index of the solid, active medium (12, 22, 211, 213).

4. Laser cavity according to claim 3, **characterized in that** the thin film (13, 21, 212) is formed from a base material having an identical or similar crystal structure to that of the solid, active medium (7, 12, 22, 21, 211, 213), said base material being doped with erbium, chromium, thulium or holmium ions.

5. Laser cavity according to claim 1 or 2, **characterized in that** the cavity exit mirror (15) is directly deposited on the saturable absorber film (13).

6. Laser cavity according to claim 5, **characterized in that** the entrance mirror (14) is directly deposited on the solid, active medium (12, 22).

7. Laser cavity according to either of the claims 1 and 2, **characterized in that** the cavity has a waveguide structure.

8. Laser cavity according to claim 7, **characterized in that** the active laser material is constituted by a first film (211).

9. Laser cavity according to claim 8, **characterized in that** the saturable absorber film (212) is located between the first active laser medium film (211) and a second active laser medium film (213).

10. Laser cavity according to claim 9, **characterized in that** the two active laser medium films (211, 212) is depositable by liquid phase epitaxy.

11. Laser cavity according to claim 9, **characterized in that** the three thin films (211, 212, 213) have an index gradient so as to optimize guidance.

12. Laser cavity according to claim 11, **characterized in that** the saturable absorber film (212) is formed from a base material having an identical or similar crystal structure to that of the solid, active medium (211, 213), said base material being doped with erbium, chromium, thulium or holmium ions.

13. Laser incorporating a laser cavity according to one of the preceding claims and cavity pumping means.

## Patentansprüche

1. Laserresonator mit einem festen aktiven Lasermedium (12, 22, 211, 213), einem sättigbaren Absorptionselement (13, 21, 212), einem Eingangsspiegel (14) und einem Ausgangsspiegel (15),
**dadurch gekennzeichnet,**
**dass** das sättigbare Absorptionselement durch eine direkt auf dem genannten festen aktiven Medium (12, 22) abgeschiedene Dünnschicht aus sättigbarem Absorptionsmaterial gebildet wird.

2. Laserresonator nach Anspruch 1, **dadurch gekennzeichnet, dass** die Dünnschicht eine mittels Flüssigphasen-Epitaxie hergestellte Abscheidung ist.

3. Laserresonator nach Anspruch 1 oder 2, **dadurch gekennzeichnet, dass** die Brechzahl der Dünnschicht aus sättigbarem Absorptionsmaterial (8, 13, 212) an die Brechzahl des festen aktiven Mediums (12, 22, 211, 213) angepasst ist.

4. Laserresonator nach Anspruch 1, **dadurch gekennzeichnet, dass** die Dünnschicht (13, 212) durch ein Basismaterial gebildet wird, das eine identische oder ähnliche kristalline Struktur wie das feste aktive Medium (7, 12, 22, 211, 213) aufweist, wobei dieses Basismaterial mit Erbium-, Chrom-, Thulium- oder Holmium-lonen dotiert ist.

5. Laserresonator nach Anspruch 1 oder 2, **dadurch gekennzeichnet, dass** der Ausgangsspiegel (15) des Resonators direkt auf der Dünnschicht aus sättigbarem Absorptionsmaterial (13) abgeschieden ist.

6. Laserresonator nach Anspruch 5, **dadurch gekennzeichnet, dass** der Eingangsspiegel (14) direkt auf dem festen aktiven Medium (12, 22) abgeschieden ist.

7. Laserresonator nach einem der Ansprüche 1 bis 3, **dadurch gekennzeichnet, dass** er eine Wellenleiterstruktur aufweist.

8. Laserresonator nach Anspruch 7, **dadurch gekennzeichnet, dass** das aktive Lasermedium durch eine erste Dünnschicht (211) gebildet wird.

9. Laserresonator nach Anspruch 8, **dadurch gekennzeichnet, dass** die Dünnschicht (212) aus sättigbarem Absorptionsmaterial zwischen der ersten Dünnschicht aus aktivem Lasermedium (211) und einer zweiten Dünnschicht aus aktivem Lasermedium (213) enthalten ist.

10. Laserresonator nach Anspruch 9, **dadurch gekennzeichnet, dass** die beiden Dünnschichten (211, 213) einen die Leitung optimierenden Brechzahlgradienten aufweisen.

11. Laserresonator nach Anspruch 9, **dadurch gekennzeichnet, dass** die drei Dünnschichten (211, 212, 213) einen die Leitung optimierenden Brechzahlgradienten aufweisen.

12. Laserresonator nach Anspruch 11, **dadurch gekennzeichnet, dass** die Dünnschicht (212) aus sättigbarem Absorptionsmaterial durch ein Basismaterial gebildet wird, das eine identische oder ähnliche kristalline Struktur wie das feste aktive Medium (211, 213) aufweist, wobei dieses Basismaterial mit Erbium-, Chrom-, Thulium- oder Holmium-lonen dotiert ist.

13. Laser mit einem Laserresonator nach einem der vorangehenden Ansprüche, und Pumpeinrichtungen des Resonators.
